# EUROPEAN PATENT SPECIFICATION

(11) **EP 2 885 341 B1**
(45) Date of publication and mention of the grant of the patent: **17.08.2016**
(21) Application number: 13776912.1
(22) Date of filing: 02.10.2013
(51) Int. Cl.: C08L 1/28, C08J 3/03, C08J 3/07, C08J 3/09, C08J 3/11

(54) **NONAQUEOUS METHOD OF DISPERSING A WATER SOLUBLE POLYMER**
NICHTWÄSSRIGES VERFAHREN ZUM DISPERGIEREN EINES WASSERLÖSLICHEN POLYMERS
PROCÉDÉ NON AQUEUX DE LA DISPERSION D'UN POLYMÈRE HYDROSOLUBLE

(30) Priority: 16.10.2012 US 201261714369 P
(43) Date of publication of application: 24.06.2015
(73) Proprietor: Rohm and Haas Company, Philadelphia, PA 19106 (US)
(72) Inventor: OBERLIN, Anne, Philadelphia PA 19106 (US)
(74) Representative: Houghton, Mark Phillip
(86) International application number: PCT/US2013/063017
(87) International publication number: WO 2014/062379

(56) References cited:
- WO-A1-01/81476
- WO-A1-97/46606
- WO-A1-2013/095996

## Description

### Field

The present invention relates to methods and compositions for dispersion of water soluble polymers.

### Background

Many water soluble polymers (cellulose, cellulose derivatives, gums, and the like) are typically sold in solid, dry, form, and hence powder handling and processing properties are extremely important. For example, a low dust content is desirable. Also, the ability of the dry powder to be poured from a container or receptacle is described as flowability. Flowability is affected by particle shape and size distribution, and resulting bulk density. Bulk density is the mass of powdered solid material per unit of volume occupied. Acceptable flowability generally depends upon relatively high bulk density and relatively low angle of repose. The angle of repose is the maximum angle between the slope of a conical discharged pile of powder and the surface it rests upon, a lower angle representing a more widely spread pile.

As part of using the water soluble polymer in its various applications, the water soluble polymer must be dissolved. Dissolution is frequently described as a process with two overlapping phenomena, dispersion and hydration. Dispersion refers to spreading of particles or groups of polymer chains throughout the solution. Hydration refers to loosening of the polymer chains and expansion of their hydrodynamic volume (and corresponding viscosity buildup). If dispersion is poor, or if hydration outpaces dispersion, hydrated polymer can swell and isolate relatively dry, non-hydrated polymer from the solution, forming lumps. Desirable dispersion and hydration are normally characterized by little to no lump formation and a rapid viscosity build up over time, respectively.

Accordingly, there is a need in the industry to reduce the foregoing problems (dust, variable flow, inconsistent dispersion, or undesirable rate of hydration) in order to simplify formulation of products incorporating water soluble polymers.

WO 2013/095996 teaches a nonaqueous method of dispersing a water soluble polymer comprising forming a nonaqueous slurry comprising polypropylene glycol.

WO 01/81476 teaches a suspension of water soluble polymers in surfactant free non-aqueous solvents.

### Detailed Description

In one embodiment, the present invention provides a method of dispersing and/or hydrating a water soluble polymer, comprising forming a nonaqueous slurry of one or more polyethers, one or more water soluble polymers, and hydrophobically modified ethoxylated urethane, provided that the slurry contains less than five percent water, with the exception of methods comprising forming the nonaqueous slurry of polypropylene glycol, water soluble polymer, and hydrophobically modified ethoxylated urethane. The nonaqueous slurry can be put in contact with water to disperse and hydrate the water soluble polymer.

The term "polyether" means an oxygenated solvent or polyol. It is contemplated that the polyether may include methyl ether and/or propyl ether units in its composition (with the exception of polypropylene glycol), and/or be a polyglycol copolymer of ethylene oxide and propylene oxide.

In one embodiment, the water soluble polymer is at least one water-soluble, film-forming natural and synthetic polymers including alkylcellulose ethers, hydroxyalkyl cellulose ethers and hydroxyalkyl alkylcellulose ethers, including methylcellulose; hydroxypropyl methylcellulose (HPMC); hydroxyethyl methylcellulose (HEMC); hydroxyethyl cellulose (HEC); hydroxypropyl hydroxyethylcellulose (HPHEC) and hydroxypropylcellulose (HPC), water-soluble, high molecule weight polymers of ethylene oxide, preferably of about 20,000 molecular weight or higher; natural products such as guar gum, xanthan gum and water-soluble thickening agents. Preferably, the water soluble polymer is a water soluble modified cellulose ether selected from the group consisting of: alkyl cellulose derivatives, hydroxyalkyl cellulose derivatives, cationic hydroxyalkyl cellulose derivatives (the cationic specie being a quaternary alkyl amine) and carboxylalkyl cellulose derivatives. In one embodiment, the water soluble modified cellulose ether is not a hydration-retarded (surface- treated) grade. Preferred water soluble polymers are hydroxyethyl cellulose (available under the tradename CELLOSIZE from The Dow Chemical Company), cationically-modified hydroxyethylcellulose (cat- HEC), hydroxypropylmethylcellulose (available under the tradename METHOCEL from The Dow Chemical Company), and polyethylene oxide (available under the tradename POLYOX from The Dow Chemical Company).

Hydrophobically modified ethoxylated urethane (HEUR) has a MW between 20,000 to 80,000 g/mol. In one embodiment, the hydrophobically modified ethoxylated urethanes is ACUSOL™ 880 from the Dow Chemical Company.

In one embodiment, the non aqueous slurry has less than 4%, preferably less than 3%, and more preferably less than 2% water.

In one embodiment, the present invention provides a non aqueous slurry consisting essentially of one or more polyethers, one or more water soluble polymers, and hydrophobically modified ethoxylated urethane, provided that the slurry contains less than five percent water, with the exception of methods comprising forming the nonaqueous slurry of polypropylene glycol, water soluble polymer, and hydrophobically modified ethoxylated urethane. In one embodiment, the non aqueous slurry is phosphate free. In one embodiment, the non aqueous slurry is oil free. In one embodiment, the non aqueous slurry is surfactant free.

The present invention speeds dissolution of water soluble polymers in water, and accordingly finds use in personal care and fabric care applications, where water soluble polymers are hydrated and incorporated into personal care or fabric care formulations. In one embodiment, formulation time is decreased due to faster dissolution.

### Examples

### Example 1

A nonaqueous slurry of the present invention is described in TABLE 1 in weight percent:

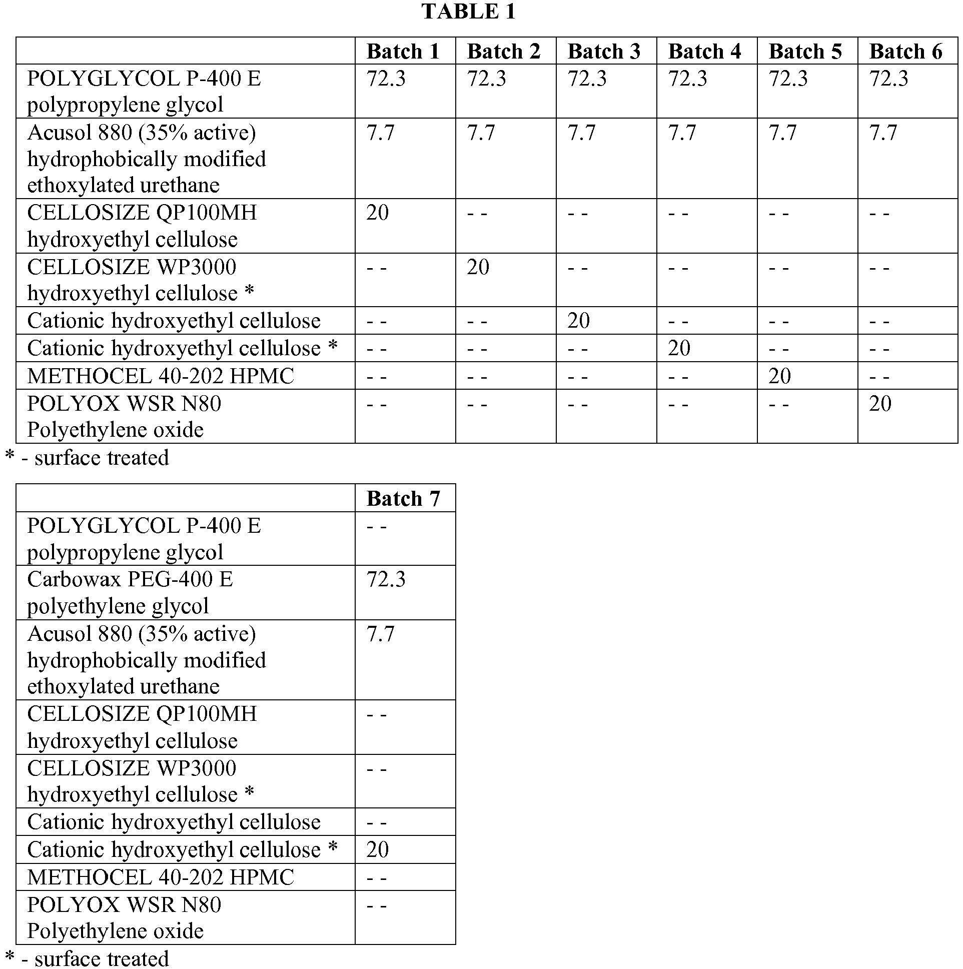

### (Batches 1-6 are comparative.)

At room temperature, polypropylene glycol (comparative) or polyethylene glycol (invention) in a 200mL plastic beaker is stirred at 500 rpm (Heidolph RZR 2020 agitator from

Heidolph, Germany and a four square blades propeller, from KA Werke, Germany). Then, hydrophobically modified ethoxylated urethane is added under agitation at 500 rpm and stirred until completely dissolved, forming an opalescent mixture. Still under 500 rpm agitation, the water soluble polymer is added slowly, and the agitation continued at 500 rpm for 10-15 minutes to form a non-aqueous slurry.

### Example 2

Batches 1-7 (Batches 1-6 are comparative) were made substantially according to Example 1, and tested. Visually, the six formulations presented no phase separation after 1 week of storage either at room temperature, 4°C, or 40°C.

Comparative Batch 3 was selected for further characterization, viscosity using a Brookfield DV III Ultra programmable rheometer, with the spindle #64, as shown in TABLE 2:

**TABLE 2**

| | **rpm** | **6** | **3** | **6** | **12** | **30** | **60** |
|---|---|---|---|---|---|---|---|
| Day 1 | viscosity (cPs) | 59 000 | 14 200 | 8200 | 4950 | 2560 | 1 690 |
| 22.5°C | % torque | 5.9 | 7.1 | 8.2 | 9.9 | 12.8 | 16.9 |
| +4 weeks | viscosity (cPs) | 60 000 | 10 000 | 6350 | 3440 | 3440 | 2280 |
| 23.5°C | % torque | 6 | 8.4 | 10.1 | 12.7 | 17.2 | 22.8 |

After 4 weeks, Batch 3 still had no phase separation and the viscosity indicates the slurry is stable.

### Example 3

Batches 1-5 (all comparative) were made substantially according to Example 1, and tested for dissolution versus the corresponding untreated water soluble polymer, all at 2% concentration. Results are presented in TABLE 3.

**TABLE 3**

| | **Observations** |
|---|---|
| Batch 1 | Good: homogeneous, opalescent |
| Batch 2 | Good: homogeneous, opalescent |
| Batch 3 | Good: homogeneous, opalescent |
| Batch 4 | Good: homogeneous, opalescent |
| Batch 5 | Good: homogeneous, opalescent |
| Comparative | Poor: opaque |
| CELLOSIZE QP100MH hydroxyethyl cellulose | |
| Comparative | Poor: opaque |
| CELLOSIZE WP3000 hydroxyethyl cellulose * | |
| Comparative | Failed: gel formation |
| Cationic hydroxyethyl cellulose | |
| Comparative | Failed: gel formation |
| Cationic hydroxyethyl cellulose * | |
| Comparative | Failed: gel formation |
| METHOCEL 40-202 HPMC | |

10g of each inventive slurry listed (effectively containing 2g of water soluble polymer) were placed in 90g deionized water and agitated 2 min (after polymer addition) at 500rpm using an Overhead agitator, Heidolph RZR 2020 from Heidolph, Germany.

2g of the listed conventional cellulose ethers were placed in 98g deionized water and agitated 2 min (after polymer addition) at 500rpm using an Overhead agitator, Heidolph RZR 2020 from Heidolph, Germany.

Each solution was evaluated by a trained panelist for evidence of dissolution problems known to those skilled in the art (fish-eyes, gel formation, opaqueness). The conclusion was that the present invention offered faster and easier dissolution.

## Claims

1. A method of dispersing and hydrating a water soluble polymer, comprising:
forming a nonaqueous slurry of one or more polyethers, one or more water soluble polymers, and hydrophobically modified ethoxylated urethane, provided that the slurry contains less than five percent water; and then
contacting the nonaqueous slurry with water to disperse and hydrate the water soluble polymer,
with the exception of methods comprising forming the nonaqueous slurry of polypropylene glycol, water soluble polymer, and hydrophobically modified ethoxylated urethane.

2. The method of Claim 1, wherein the water soluble polymer is a water soluble modified cellulose ether selected from the group consisting of: alkyl cellulose derivatives, hydroxyalkyl cellulose derivatives, cationic hydroxyalkyl cellulose derivatives (the cationic specie being a quaternary alkyl amine) and carboxylalkyl cellulose derivatives.

3. The method of Claim 1, wherein the water soluble polymer is selected from the group consisting of: hydroxyethyl cellulose, cationically-modified hydroxyethylcellulose, hydroxypropylmethylcellulose, and polyethylene oxide.

4. The method of Claim 1, wherein the method is performed without addition of heat.

5. A nonaqueous slurry consisting essentially of:
polyethylene glycol,
at least one of hydroxyethyl cellulose, cationically-modified hydroxyethylcellulose, hydroxypropylmethylcellulose, and polyethylene oxide, and
hydrophobically modified ethoxylated urethane,
provided that the slurry contains less than five percent water.

6. A personal care composition containing water soluble polymer, formed by the method of Claim 1.

7. A fabric care composition containing water soluble polymer, formed by the method of Claim 1.

## Patentansprüche

1. Ein Verfahren zum Dispergieren und Hydratisieren eines wasserlöslichen Polymers, beinhaltend:
das Bilden einer nichtwässrigen Aufschlämmung eines oder mehrerer Polyether, eines oder mehrerer wasserlöslicher Polymere und hydrophob modifizierten ethoxylierten Urethans, vorausgesetzt die Aufschlämmung enthält weniger als fünf Prozent Wasser; und anschließend
das In-Kontakt-Bringen der nichtwässrigen Aufschlämmung mit Wasser zum Dispergieren und Hydratisieren des wasserlöslichen Polymers,
mit der Ausnahme von Verfahren, die das Bilden der nichtwässrigen Aufschlämmung aus Polypropylenglycol, wasserlöslichem Polymer und hydrophob modifiziertem ethoxyliertem Urethan beinhalten.

2. Verfahren gemäß Anspruch 1, wobei das wasserlösliche Polymer ein wasserlöslicher modifizierter Celluloseether ist, der aus der Gruppe, bestehend aus Alkylcellulosederivaten, Hydroxyalkylcellulosederivaten, kationischen Hydroxyalkylcellulosederivaten (wobei die kationische Spezies ein quaternäres Alkylamin ist) und Carboxylalkylcellulosederivaten, ausgewählt ist.

3. Verfahren gemäß Anspruch 1, wobei das wasserlösliche Polymer aus der Gruppe, bestehend aus Hydroxyethylcellulose, kationisch modifizierter Hydroxyethylcellulose, Hydroxypropylmethylcellulose und Polyethylenoxid, ausgewählt ist.

4. Verfahren gemäß Anspruch 1, wobei das Verfahren ohne Zusatz von Wärme durchgeführt wird.

5. Eine nichtwässrige Aufschlämmung, die im Wesentlichen aus Folgendem besteht:
Polyethylenglycol,
mindestens einem von Hydroxyethylcellulose, kationisch modifizierter Hydroxyethylcellulose, Hydroxypropylmethylcellulose und Polyethylenoxid und
hydrophob modifiziertem ethoxyliertem Urethan,
vorausgesetzt die Aufschlämmung enthält weniger als fünf Prozent Wasser.

6. Eine Körperpflegezusammensetzung, die wasserslösliches Polymer enthält, gebildet nach dem Verfahren gemäß Anspruch 1.

7. Eine Textilpflegezusammensetzung, die wasserslösliches Polymer enthält, gebildet nach dem Verfahren gemäß Anspruch 1.

## Revendications

1. Une méthode de dispersion et d'hydratation d'un polymère hydrosoluble, comprenant :
la formation d'une suspension épaisse non aqueuse d'un ou de plusieurs polyéthers,
d'un ou de plusieurs polymères hydrosolubles, et d'uréthane éthoxylé hydrophobiquement modifié, à la condition que la suspension épaisse contienne moins de cinq pour cent d'eau ; suivie de
la mise en contact de la suspension épaisse non aqueuse avec de l'eau pour disperser et hydrater le polymère hydrosoluble,
à l'exception des méthodes comprenant la formation de la suspension épaisse non aqueuse à partir de propylène glycol, de polymère hydrosoluble, et d'uréthane éthoxylé hydrophobiquement modifié.

2. La méthode de la revendication 1, où le polymère hydrosoluble est un éther de cellulose hydrosoluble modifié sélectionné dans le groupe consistant en : des dérivés d'alkylcellulose, des dérivés d'hydroxyalkylcellulose, des dérivés d'hydroxyalkylcellulose cationiques (l'espèce cationique étant une alkylamine quaternaire), et des dérivés de carboxyalkylcellulose.

3. La méthode de la revendication 1, où le polymère hydrosoluble est sélectionné dans un groupe consistant en : l'hydroxyéthylcellulose, l'hydroxyéthylcellulose cationiquement modifiée, l'hydroxypropylméthylcellulose, et l'oxyde de polyéthylène.

4. La méthode de la revendication 1, la méthode étant mise en oeuvre sans apport de chaleur.

5. Une suspension épaisse non aqueuse consistant essentiellement en :
du polyéthylène glycol,
au moins un composé parmi l'hydroxyéthylcellulose, l'hydroxyéthylcellulose cationiquement modifiée, l'hydroxypropylméthylcellulose, et l'oxyde de polyéthylène, et
de l'uréthane éthoxylé hydrophobiquement modifié,
à la condition que la suspension épaisse contienne moins de cinq pour cent d'eau.

6. Une composition de soins corporels contenant un polymère hydrosoluble, formée au moyen de la méthode de la revendication 1.

7. Une composition pour l'entretien de textiles contenant un polymère hydrosoluble, formée au moyen de la méthode de la revendication 1.
